# EUROPÄISCHE PATENTSCHRIFT

(11) **EP 0 797 713 B1**
(45) Veröffentlichungstag und Bekanntmachung des Hinweises auf die Patenterteilung: **22.09.1999**
(21) Anmeldenummer: 95935449.9
(22) Anmeldetag: 14.10.1995
(51) Int. Cl.: E04D 12/00, B32B 5/22

(54) **DIFFUSIONSFOLIE, INSBESONDERE IN FORM EINER UNTERSPANNBAHN FÜR DÄCHER**
DIFFUSION SHEET, IN PARTICULAR IN THE FORM OF A BRACED UNDERSHEET FOR ROOFS
FEUILLE DE DIFFUSION, NOTAMMENT SOUS LA FORME D'UNE FEUILLE ARMEE DE SOUS-COUCHE POUR TOITS

(30) Priorität: 12.12.1994 DE 9419876 U; 23.05.1995 DE 29508520 U
(43) Veröffentlichungstag der Anmeldung: 01.10.1997
(73) Patentinhaber: Klöber, Johannes, 58256 Ennepetal (DE)
(72) Erfinder: KLEIN, Hans-Georg, D-42477 Radevormwald (DE)
(74) Vertreter: Rieder, Hans-Joachim, Dr.
(86) Internationale Anmeldenummer: EP9504045
(87) Internationale Veröffentlichungsnummer: WO9618781

(56) Entgegenhaltungen:
- EP-A- 0 169 308
- EP-A- 0 183 266
- EP-A- 0 302 597
- EP-A- 0 352 993
- BE-A- 718 134
- DE-A- 4 303 726
- DE-U- 9 407 750
- FR-A- 2 677 062
- US-A- 1 640 619

## Beschreibung

Aus der EP 0 183 266 ist eine Unterspannbahn bekannt. Eine diffusionsoffene Folie ist dort auf eine Weichschaumstoffunterlage aufgebracht. Zwischen Weichschaumstoffunterlage und Folie liegt ein Armierungsgitter. Die Folie ist in den Gitterzwischenräumen flächig mit der Schaumstoffunterlage durch Flammkaschieren verbunden.

Aus der EP 0 169 308 ist eine Unterspannbahn bekannt, bei der eine diffusionsoffene Polyurethanfolie nicht auf einem Weichschaumstoff, sondern auf einer Vliesschicht aufkaschiert ist, ebenfalls unter Zwischenlage eines Gitters. Auch hier besteht innerhalb der Gitterfelder ein flächiger Verbund zwischen Unterspannbahn und Vliesschicht.

Aus dem US-Patent 4,824,499 ist ein Fertigungsverfahren bekannt, wie eine dreischichtige diffusionsoffene Folie durch Druckaufbringung gefertigt werden kann.

Der Erfindung liegt die Aufgabe zugrunde, eine Unterspannbahn zur Verwendung als Trennlage zwischen einer Metalleindeckung und einer darunterliegenden Schalung anzugeben.

Gelöst wird die Aufgabe durch die im Anspruch 1 angegebene Erfindung, wobei darauf abgestellt ist, daß auf eine der Folienbreitseiten einer wasserdichten, aber dampfdurchlässigen Diffusionsfolie eine Kunststoffarmierung in Form eines heiß aufgesiegelten Gitters aufgebracht ist, welches Gitter zur Entwässerung des zwischen Folienbreitseite und Metalleindeckung gebildeten Belüftungs-Abstandsraumes brückenartig strukturiert ist, mit einer kleingehaltenen Kontaktfläche zur gittertragenden Folienbreitseite.

Zufolge dieser Ausgestaltung bilden die Gitterstege nicht nur eine Trennlage, sondern sind so gestaltet, daß sie einen Belüftungs-Abstandsraum zwischen Aufsiegelungs-Grundfläche und Scheitellinie der Gitterstege bilden. Neben der Entlüftung tritt auch die Funktion einer Entwässerung auf. An der Metallabdeckung kondensierendes Wasser kann in den Gitterfreiraum abtropfen und auf der diffusionsoffenen, aber dampfdurchlässigen Diffusionsfolie ablaufen.

Zur Fertigung einer nach der Erfindung ausgebildeten Unterspannbahn werden zwei vorgefertigte Komponenten zusammengeführt und in geeignerter Weise miteinander verbunden. Das heiß aufgesiegelte, selbst aber durch Beschichtung haftvermittelnde, zweckmäßig netzartige Gelege oder Gitter schränkt die Diffusionsfähigkeit der Folie praktisch nicht ein. Das Aufsiegeln läßt die darunterliegenden, netz-/gitterabgedeckten Bereiche der Diffusionsfolie selbst bei partieller Einbettung noch überwiegend bestimmungsgemäß wirksam. Als vorteilhaft erweist es sich überdies, daß zumindest die Gitterknotenpunkte an das Grundmaterial der Diffusionsfolie angebunden und zumindest partiell eingebettet sind. Diese Zonen wirken wie "Knotenbleche" an sonst beweglichen Gittermaschen. Die im Grunde exponierte Lage des aufgesiegelten Gitters läßt sich bei bestimmten Konstruktionen als Trennlage nutzen, beispielsweise um den Kontakt aus den unterschiedlichsten Gründen unverträglicher Lagen auszuschließen, bzw. wesentlich zu minimieren. Es ergibt sich eine willkommene Einsatzmöglichkeit für Metalleindeckungen von Dächern. Zum einen bleibt die bekannte dehnungsabhängige Beweglichkeit zwischen den Metalleindeckungen, meist Kupfer oder Zink, erhalten. Die entsprechende Beweglichkeit war bei auf die Schalung aufgelegter Bitumenbahnen bestimmter Bitumenarten problematisch, da die als exponierte Gleitvorsprünge fungierenden Sand unter der Sommerhitze in die Bitumenbahn eintauchen, und es somit sogar zu einem Direktkontakt mit der darüberliegenden Metalleindeckung kam, was aus den obengenannten Gründen problematisch ist, z. B. zufolge Metallfraßes. Es kam zu "Verklebungen", die die Dehnfähigkeit dann erheblich beeinträchtigen. Die Sparrendämmung läßt sich im übrigen bis unter die die Metalleindeckung tragende Schalung heranziehen. So liegt eine Voll-Sparrendämmung vor. Weiter wird vorgeschlagen, daß die Gitterstege unterschiedlich dick sind. Hierüber läßt sich die Intensität der Belüftung wählen. Vorteilhaft ist es zudem, daß in einer Richtung verlaufende Gitterstege des Gitters hochkant stehen. Dessen Stege gehen über die bekannte Dicke der Gitterstege eines Netzwerkes deutlich hinaus. Weiter besteht ein vorteilhafter Lösungsvorschlag darin, daß Stege der einen Erstreckungsrichtung von der Aufsiegelungs-Grundfläche abstehend verlaufen und die in der anderen Erstreckungsrichtung verlaufenden Stege als Tragleisten in der Aufsiegelungs-Grundfläche stehen. Das führt zu der mechanisch hoch stabilen, brückenartigen Struktur, wobei der Kontakt des entsprechenden Netzwerkes bzw. Steggitters zur es tragenden Grundfläche hin möglichst klein gehalten ist, so daß die Diffusionsfolie in ihrer Wirksamkeit trotz der Überlagerung auch hier im wesentlichen erhalten bleibt. Um bestmögliche Voraussetzungen vor allem für die Entwässerung zu bieten, wird vorgeschlagen, daß die Tragleisten zur Aufsiegelungs-Grundfläche hin offene Grund Querdurchbrüche aufweisen. Dadurch ist man weitestgehend unabhängig von der Verlegungsrichtung. Eine verlegetechnisch günstige Bauform wird erreicht durch einen seitlichen Überstand der Folienbahn über die vom Gitter eingenommene Fläche. Hierdurch läßt sich eine zwar folienmäßig überlappende, in bezug auf das armierend wirkende Gitter völlig stufenlose Addition der einzelnen Folienbahnen erreichen. Das vermeidet jedwedes "Durchzeichnen" der Gitterstruktur auf die sie überlagernde, meist dünne Metalleindekkung. Auch das temperaturbedingte Wandern der Metallschicht ist nicht behindert. Im Hinblick auf einen sogar dichtenden Abschluß erweist es sich dabei als vorteilhaft, daß ein Überstands-Streifen und ein diesem gegenüberliegender Rand-Streifen der nächsten seitlich anschließenden Folienbahn mit einer Haftklebeschicht ausgestattet sind. Die Unterspannbahn erhält so einen guten Gesamt-Flächenverbund. Bezüglich der Haftklebeschicht kann es sich um eine aufgetragene Schicht handeln oder aber um einen beidseitig wirkenden Klebestreifen. Solche sogenannten Transferstreifen sind im Handel erhältlich und in schutzstreifenabgedeckter Rollenform leicht handhabbar. Weiter wird vorgeschlagen, daß die Überstands-Streifen parallel zu den in einer Erstreckungsrichtung verlaufenden Stegen ausgerichtet sind. Dabei ist in bezug auf das korrekte Verlegen von Vorteil, wenn der Parallelverlauf zu den hochkant stehenden Stegen des Gitters gegeben ist. Optimiert ist die Haftverbindung zwischen Diffusionsfolie und Gitter, wenn schließlich so vorgegangen wird, daß das Aufsiegeln in einem Flammkaschieren besteht derart, daß dachförmig zueinander stehende Basisflächen der Stege des Gitters, mit der Firstlinie auf die Folienbahn gerichtet, zu einer wulstähnlichen Fußzone des Steges verformt ist. Eine solche anfangs schneidenartige Querschnittsgestalt der Stege ist in bezug auf die Wärmeaufnahme durch einen gewissen Verteilungseffekt günstig.

Der Gegenstand der Erfindung ist nachstehend anhand zweier zeichnerisch veranschaulichter Ausführungsbeispiele näher erläutert. Es zeigt:

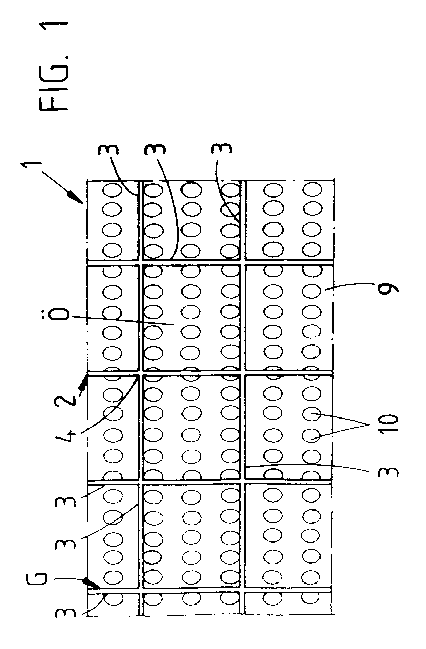

- Fig. 1: die Draufsicht auf einen Abschnitt der erfindungsgemäßen Unterspannbahn gemäß erstem Ausführungsbeispiel, vergrößert,
- Fig. 2: die Unterspannbahn in Perspektive,
- Fig. 3: ein Verlegeschema der Unterspannbahn mit Dachkonstruktion und Metalleindeckung,
- Fig. 4: eine Schemaskizze, den Produktionsablauf zur Herstellung des aus Gitter und Diffusionsfolie bestehenden Produkts wiedergebend,

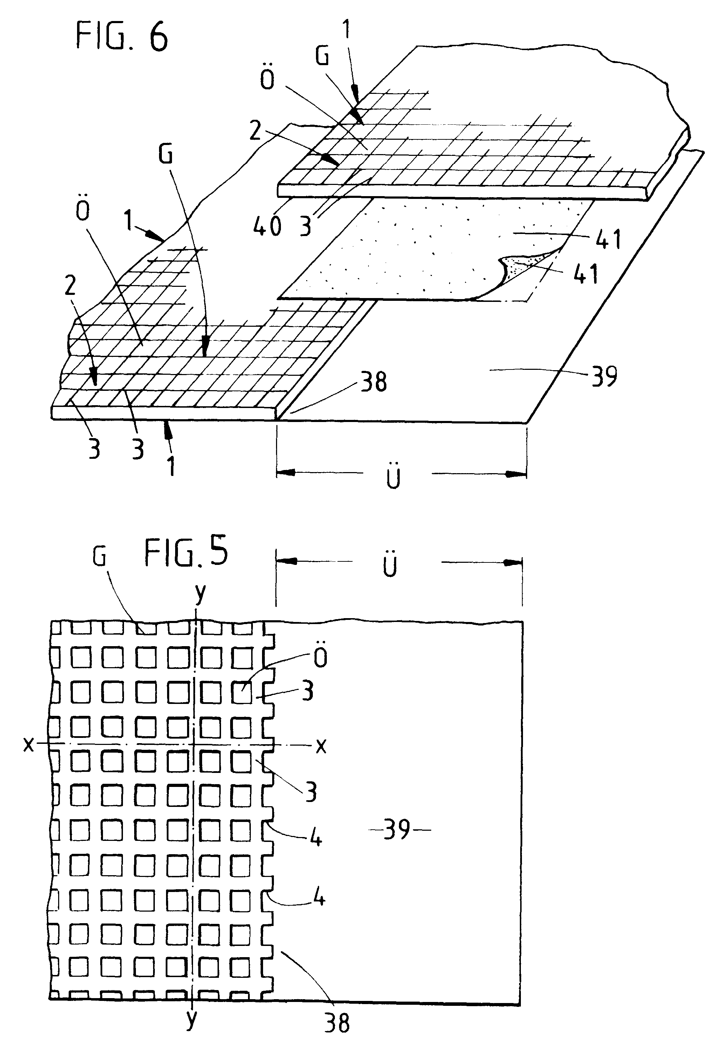

- Fig. 5: die Draufsicht auf einen Abschnitt der armierten Unterspannbahn mit seitlichem Überstand der diesbezüglichen Folienbahn, das zweite Ausführungsbeispiel verkörpernd,
- Fig. 6: in perspektivischer Darstellung, einen Überlappungsanschluß zur benachbarten Folienbahn einleitend,
- Fig. 7: die Stirnansicht hierzu, weitestgehend schematisch dargestellt,
- Fig. 8: eine bezüglich der Haftklebeschicht variierte Ausbildung,
- Fig. 9: eine der Fig. 7 entsprechende Darstellung, jedoch bei erfolgtem Anschluß zur benachbarten Folienbahn hin,
- Fig. 10: in schaubildlicher Darstellung den Verlegungsvorgang an einer Dachkonstruktion zeigend,
- Fig. 11: den Schnitt gemäß Linie XI-XI in Fig. 10, stark vergrößert,
- Fig. 12: eine Schemaskizze, den Produktionsablauf zur Herstellung des aus Gitter und Diffusionsfolie bestehenden Produkts wiedergebend, und zwar im Zuge einer Flamm-Kaschierung und
- Fig. 13: einen der Fig. 11 entsprechenden Schnitt, den Ausgangsquerschnitt der mit der Aufsiegelungs-Grundfläche der Diffusionsfolie in Verbindung tretenden Stege, den Zulauf der Folie zeigend.

Die dargestellte, mit 1 bezeichnete Diffusionsfolie ist armiert. Die Armierung 2 besteht aus einem thermisch ansprechenden Kunststoff, z.B. einem Gelege aus PP, ein oder beidseitig beschichtet mit Ethylvinylacetat (EVA) als Haftvermittler.

Bezüglich der Diffusionsfolie 1 kann es sich um die auf dem Markt unter dem Handelsnamen Tyvek erhältliche handeln. Das Grundmaterial dieser Folie spricht auf den Schmelzpunkt der Armierung 2 respektive EVA-Beschichtung (ca. 80° C.) an. Andererseits nimmt diese Temperatur ihr nicht die Diffusionsfähigkeit.

Bei beidseitiger Beschichtung fungiert die freiliegende als Rutschsicherung.

Die Kunststoff-Armierung 2 ist zu einem Netz bzw. Gitter G vereinigt. Die entsprechenden Gitterstege 3 stehen beim Ausführungsbeispiel in senkrecht zueinander stehendem Kreuzungsverbund, bildend Gitterknotenpunkte 4.

Zumindest die Gitterknotenpunkte 4 sind in das Grundmaterial der Diffusionsfolie 1 partiell durch Heißsiegelung eingebettet. Der Zusammenhalt zwischen Diffusionsfolie 1 und Gitter G ist dabei so, daß er den üblichen mechanischen Beanspruchungen des Produkts gewachsen ist. Das Gitter G und die Diffusionsfolie 1 werden beim Heißsiegeln gegeneinander gedrückt.

Die vom Gitter G überlagerte Aufsiegelungs-Grundfläche 9 ist durch eingeprägte Vertiefungen 10 oberflächenvergrößert. Die Vertiefungen 10 erstrecken sich im wesentlichen gleichmäßig verteilt, reihenförmig angeordnet über die gesamte Aufsiegelungs-Grundfläche 9 der Diffusionsfolie 1. Die Prägung schlägt in leichter Abnahme bis zur gegenüberliegenden Folienbreitseite 11 durch. Die die Aufsiegelungs-Grundfläche 9 darstellende Folienbreitseite trägt das Bezugszeichen 12.

Die Stärke, d. h. Dicke der Gitterstege 3 ist so gewählt, daß zwischen der Aufsiegelungs-Grundfläche 9 der Diffusionsfolie 1 und den Gitterstegen 3 ein Abstandsraum A verbleibt.

Befestigungsmäßig erweist sich der äußerst geringe abdeckende Flächenanteil des Gitters G gegenüber dem der Diffusionsfolie 1 als vorteilhaft in Bezug auf das Eintreiben der üblichen Befestigungsmittel, wie beispielsweise Nägel aus. Die schon hohe Reißfestigkeit der Diffusionsfolie 1 wird durch die Armierung 2 im Hinblick auf den erstrebten Zerreißschutz optimiert.

Eine Variation des Abstandsraumes A läßt sich dadurch erreichen, daß die Gitterstege 3 unterschiedlich dick sind.

Das Ausführungsbeispiel gibt u.a. unter diesem Gesichtspunkt eine günstige Ausbildung an. Dort liegt ein dickes Gelege vor. Es besteht bspw. aus PE. Wählt man jedoch PP, Haftvermittler nützlich. Das Gitter G ist als geformtes Steggitter realisiert. Es ist eine Kreuzgitterstruktur angewandt.

Richtungsbezogen liegt baulich eine Struktur dahingehend vor, daß parallele Stege 3' der einen, firstparallelen Erstreckungsrichtung x-x von der Aufsiegelungs-Grundfläche 9 der Diffusionsfolie 1 abstehend verlaufen. So entsteht der Abstandsraum A. Die dagegen in der anderen, querenden Erstreckungsrichtung y-y parallel verlaufenden Stege 3" stehen in der Aufsiegelungs-Grundfläche 9. Sie bilden praktisch Tragleisten 14 rechteckigen Querschnitts mit vertikal längerer Seitenkante. Die deutlich schmaleren, parallel zur Diffusionsfolie 1 verlaufenden unteren kürzeren Seiten dieser Stege 3" decken nur ein Minimum der Aufsiegelungs-Grundfläche 9 ab. Diese Stege 3" stehen hochkant.

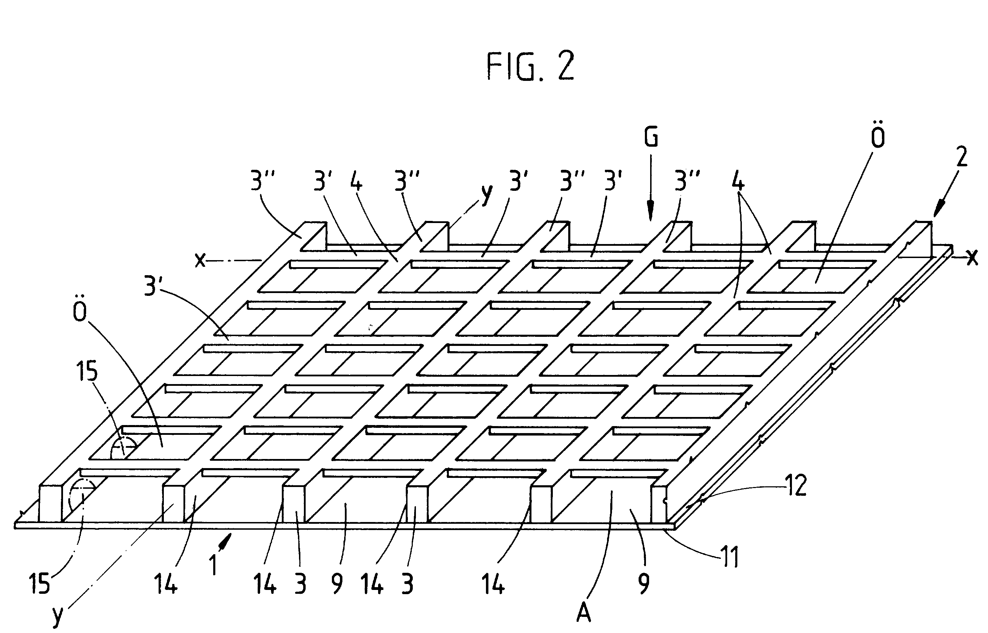

Das in Figur 2 nur schematisch dargestellte Produkt läßt aus Gründen der Deutlichkeit die Einbettung der als Tragsleisten 14 gestalteten Stege 3" zeichnerisch weg. Sie (14) sind dort aufliegend gezeichnet. Der durch eine gleichsam brückenartige Gestalt der Stege 3' erzielte Abstandsraum A ist relativ groß. Die brückenbildenden Stege 3' sind dabei der Oberseite des Gitters G so genähert, daß, abgesehen von Schrumpfungsmarken, oberseitig praktisch ein ebenengleicher Verlauf der Stege 3' und Stege 3" vorliegt. Ist die Oberseite nicht beschichtet, so läßt der Rücken dieses Steggitters Gleitbewegung einer Metalleindeckung 16 zu. Die in vertikaler Richtung gemessene Dicke der ebenfalls rechteckigen Querschnitt aufweisenden Stege 3' entspricht etwa einem Viertel der in der Vertikalen gemessenen Höhe der die erwähnten Tragleisten 14 bildenden Stege 3".

Die Gitterstruktur läßt durchgehende Kanäle zur Entlüftung/Entwässerung entstehen. Um diesbezüglich eine Unabhängigkeit der Verlegungsrichtung zu erzielen, sind an den Tragleisten 14 Querdurchbrüche 15 vorgesehen. Diese zur Aufsiegelungs-Grundfläche 9 hin offenen Querdurchbrüche 15 verringern zusätzlich die Kontaktfläche zur Aufsiegelungs-Grundfläche 9 hin. Sie erlauben eine Entwässerung auch dann, wenn die Tragleisten 14 bspw. firstparallel verlaufen.

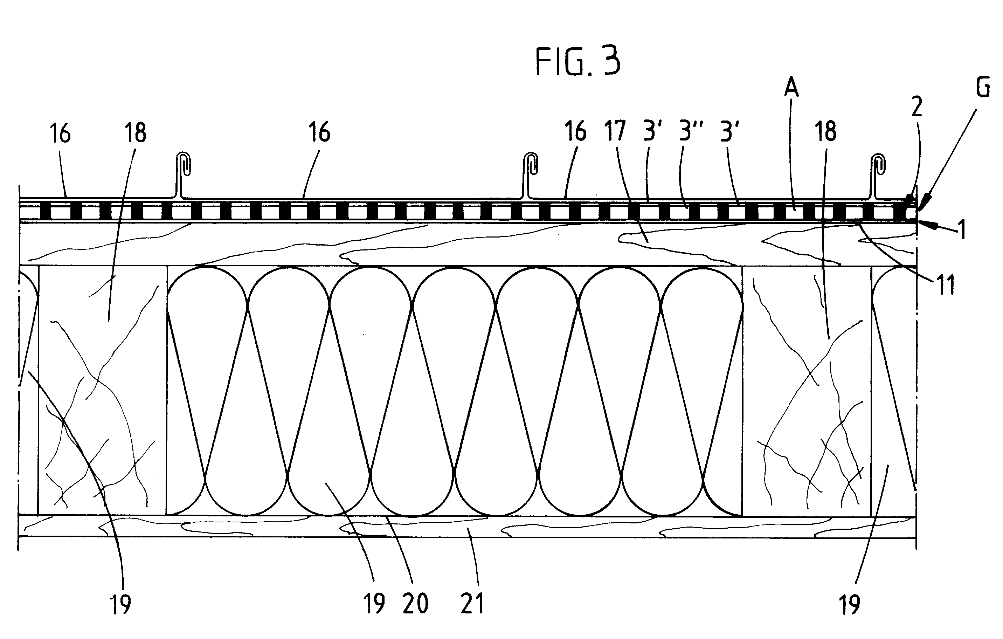

Das Zuordnungsbeispiel gemäß Fig. 3 gibt die Verwendung an einem mit Metalleindeckung 16 versehenen Dach wieder. Die Metalleindeckung 16 besteht aus einzelnen, in der klassischen Weise miteinander verbundenen Metallplatten aus Kupfer, Zink oder dergleichen. Die Metalleindeckung 16 überlagert das beschriebene Gitter G des Laminats. Die untere Folienbreitseite 11 der Diffusionsfolie 1 liegt auf einer Schalung 17 aus Holz. Letztere wird von Dachsparren 18 abgestützt. Zwischen den Dachsparren 18 befindet sich eine Vollsparrendämmung 19. Die gesamte Dachkonstruktion schließt dachraumseitig mit einer Dampfbremse/Luftsperre 20 ab, hinter welcher eine Wandschalung 20 angebracht sein kann. Der Abstandsraum A hat eine Belüftungshöhe von ca. 6 mm bis 7 mm.

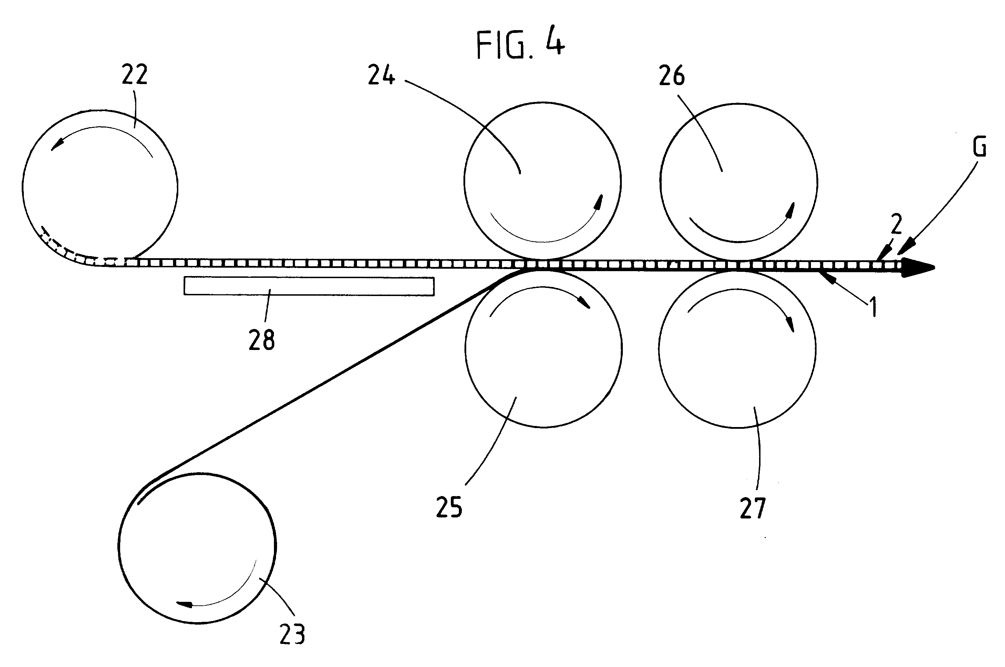

Die den Produktionsablauf wiedergebene Schemaskizze gemäß Fig. 4 zeigt eine obere Vorratsrolle 22, enthaltend das das Gitter G bildende Netzwerk oder Steggitter aus schon siegelfähigem Vollmaterial oder haftvermittelnd beschichtet mit dem das Heißsiegeln ermöglichenden Etylvenylacetat und eine untere Vorratsrolle, enthaltend die diffusions-offene Folienbahn zur Bildung der armierten Diffusionsfolie 1. Beide Bahnen laufen einem Paar Andrückwalzen 24 und 25 zu, dem horizontal beabstandet ein Transportwalzenpaar 26/27 folgt. Auch letzteres wirkt andrückend.

Im Einlaufzwickel beider Bahnen befindet sich ein Infrarot-Strahler 28, welcher das Netzwerk haftvermittelnd erwärmt und so auf den Siegel-Schmelzpunkt bringt und zugleich auch vorwärmend auf die Diffusionsfolie 1 einwirkt. In der Hauptsache erstreckt sich der Infrarot-Strahler 28 parallel an und nahe der Unterseite des Netzwerks oder Steggitters. Die Laufrichtung der Walzen und die des Produkts ist durch Pfeile angegeben.

Das Produkt wird anschließend in Rollenform überführt und abgelängt.

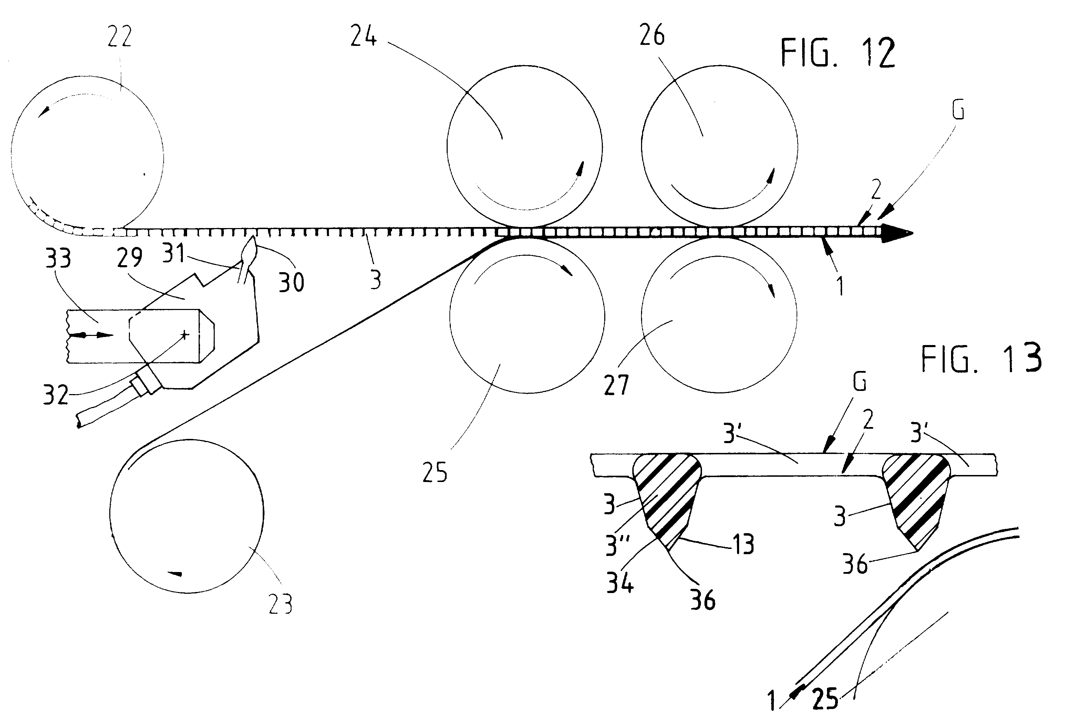

Der im Rahmen des zweiten Ausführungsbeispiels in den Fig. 12 und 13 wiedergegebene Produktionsablauf setzt anstelle des beschriebenen Infrarot-Strahlers 28 eine Brennereinheit 29 ein. Das Aufsiegeln geschieht hier über ein Flamm-Kaschieren. Die Flamme ist mit 30 bezeichnet. Sie verläßt einen gegen die Unterseite des Netzwerks bzw. Steggitters gerichteten Brennerschlitz 31. Seine Ausrichtung läßt sich variieren zufolge Kippbarkeit der Brennereinheit 29 um eine horizontale Achse 32 und horizontaler Verlagerbarkeit ihres Trägers 33.

Vorrichtungsmäßig liegt ansonsten der gleiche zum voraufgegangenen Ausführungsbeispiel beschriebene Aufbau vor; die Bezugsziffern sind entsprechend angewandt.

Das zulaufende Gitter G weist auch hier hochkant stehende, den Abstandsraum A vermittelnde Gitterstege 3 auf; richtungsbezogen handelt es sich um die mit 3" bezeichneten. Auch ist von der eingangs beschriebenen rechtekkigen Querschnittsform abgegangen. Die längeren Seitenkanten der hochkant ausgerichteten, auch hier die Tragleisten 14 bildenden Stege 3" konvergieren in Richtung der Aufsiegelungs-Grundfläche 9.

Die untere, deutlich schmaler ausgebildete Seite spitzt zudem schneidenförmig aus, d. h. etwa im unteren Viertel oder Fünftel der Höhe der Stege 3" sind dachförmig zueinander stehende Flanken oder Basisflächen 34 realisiert. Sie schließen etwa einen Winkel von ca. 90° ein und sind symmetrisch verlaufend. Die entsprechende Symmetrieachse entspricht der vertikalen Mittelebene der Stege 3".

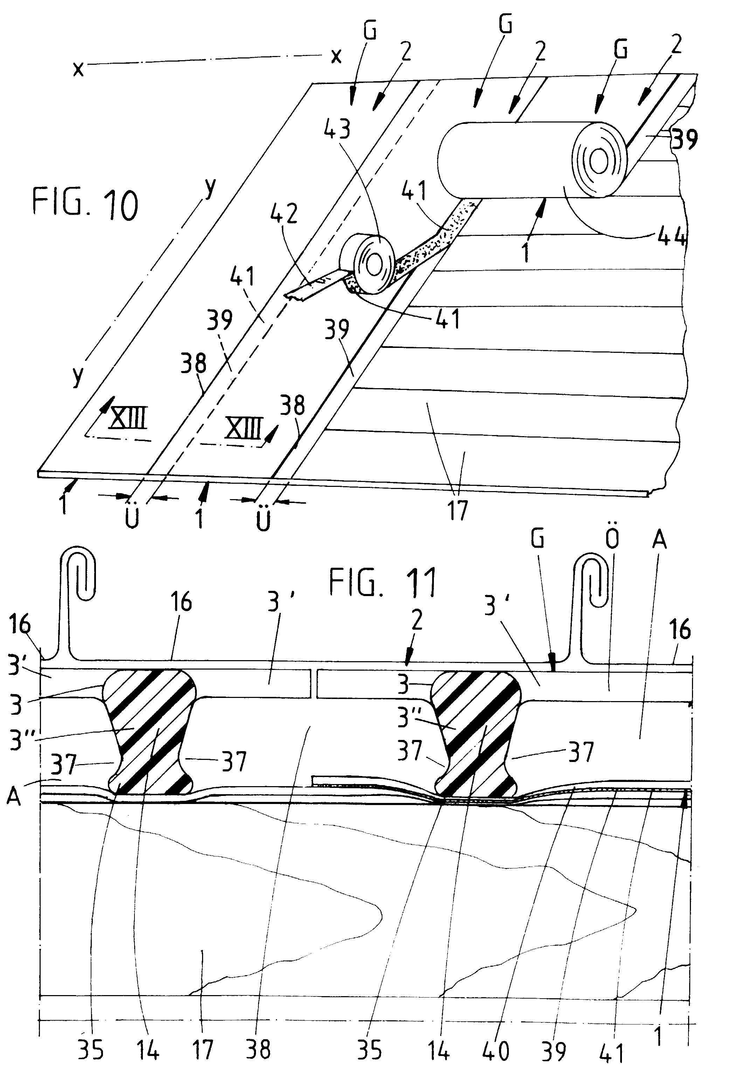

Diese schneidenartigen Vorsprünge werden im Zuge des Flamm-Kaschierens und Andrückens verformt. Die entsprechende Verformung unter Bildung sich deutlich verbreiternder, wulstartiger Fußzonen 35 geht deutlich aus Fig. 11 hervor, welche einen der Fig. 13 entsprechenden Querschnitt darstellt, und zwar am fertigen, und bereits auch dem Dach zugeordneten Produkt.

Das Zusammenfügen der beiden die armierte Diffusionsfolie 1 erzeugenden Lagen bewirkt, daß zuerst die hocherwärmte Firstlinie 36 bzw. Firstzone die korrespondierende Aufsiegelungs-Grundfläche 9 der Diffusionsfolie 1 kontaktiert. Es kommt zu einem raschen Eindringen in die polydirektionale, vliesartige Struktur dieser Folie. Der zunächst erhöhte spezifische Flächendruck geht in die dann breitere, schließlich zu der Fußzone 35 führende schweißraupenartige Struktur über. Es kommt dabei zu fußoberseitigen beiderseitigen Einziehungen 37 auf den Breitseiten des Steges 3". Die verleihen dem Querschnitt praktisch eine wespentaillenartige, sogar gelenkbewegliche Einziehung. Punktuelle Höchstbelastungen werden so besser toleriert, ohne daß es zu einem Stegbruch kommen könnte.

Die anderen Übergänge des Steges 3" zum Steg 3' hin sehen konvexe und konkave Rundungen vor, auch in Bezug auf die hier gegebenen Öffnungen Ö.

Was nun die verlegetechnische Seite des Gegenstandes gemäß zweitem Ausführungsbeispiel betrifft, so ist hier die Diffusionsfolie 1 mit einem seitlichen Überstand Ü versehen. Dieser über die vom Gitter G eingenommene Fläche hinausgehende Überstand Ü schafft einen Aufnahmefalz 38 für die nächste, seitlich anschließende Folienbahn. Der so vorliegende, gitterfreie Überstands-Streifen trägt das Bezugszeichen 39. Der ihn überlappende Rand-Streifen der seitlich anschließenden Folienbahn heißt 40. Der Anschluß ist, wie aus den Zeichnungen entnehmbar, praktisch stufenlos. Die Überlappung der Folienabschnitte in Bezug auf ein Auftragen ist unbedeutend.

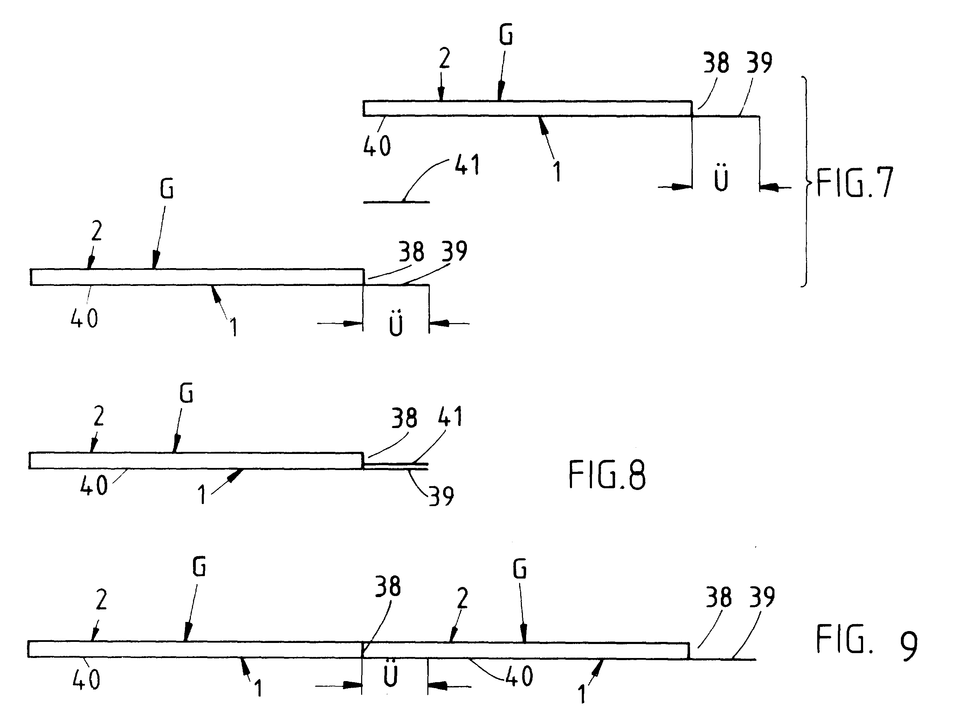

Überstands-Streifen 39 und Rand-Streifen 40 liegen in first-/traufseitig abfallender Ausrichtung. Die einander gegenüberliegenden, d. h. kongruenten Flächen der genannten Streifen 39, 40 sind mit einer Haftklebeschicht 41 ausgestattet. Es kann sich um aufgetragenen Kleber handeln (vergl. Variante gemäß Fig. 8) oder aber um einen Transferstreifen (Fig. 7), welcher beiderseits eine Selbstklebeschicht als Haftklebeschicht 41 aufweist und im übrigen rückenseitig durch den üblichen Schutzstreifen 42 abgedeckt ist. Der Transferstreifen ist in Rollenform erhältlich. Die Rolle ist in Fig. 12 mit 43 bezeichnet.

Der Überstands-Streifen 39 verläuft parallel zu den Stegen 3 des Gitters G. Bevorzugt verläuft der Überstands-Streifen 39 richtungsmäßig parallel zu den Stegen 3", also parallel zu den Stegen des Gitters G, welche hochkant stehen und die Tragleisten 14 bilden.

Die in Erstreckungsrichtung y-y ausgerichteten Tragleisten 14 können auch bei diesem Ausführungsbeispiel mit (nicht dargestellten) Querdurchbrüchen 15 versehen sein, ebenso wie das Produkt des zweiten Ausführungsbeispiels den Überstands-Streifen 39 aufweisen kann.

Die Verlegung geschieht wie folgt: Nach Legen einer ersten Bahn (Fig. 10) in vom First zur Traufe gehender Ausrichtung liegt rechtsseitig der erwähnte gitterfreie Überstands-Streifen 39 frei. Er wird oberseitig mit einer gleichgerichteten Haftklebeschicht 41 versehen, oder hat sie schon, so daß bloß noch ein Schutzstreifen abgezogen zu werden braucht. Es folgt dann das randüberlappende Auflegen der nächsten Bahn in gleicher Ausrichtung, indem der linksseitige Rand-Streifen 40 den haftkleberbeschichteten Überstands-Streifen 39 abdichtend und festlegend überfängt. Es kommt zu einem stufenlosen Anschluß zufolge des über die Gitterfreiheit erreichten Aufnahmefalzes 38.

Auch die armierte Diffusionsfolie 1 wird als Rollenvorrat bereitgehalten, so daß sich das Verlegen auf dem Dach-Arbeitsplatz gut beherrschen läßt. Diese Rolle ist mit 44 bezeichnet. Das Steggitter toleriert das Aufrollen schadfreir dies selbst bei über den hochkant stehenden Steg 3" gehender Wickelrichtung.

Die den Aufnahmefalz 38 bildende Anschlußtrennung kann unmittelbar an der Seite der Tragleiste 14 vorgenommen sein oder aber im Querschnittsbereich der in Erstreckungsrichtung x-x parallel verlaufenden Stege 3'. Vorzugsweise wird hier das Raster der Öffnung Ö beibehalten, so daß eine völlig gleichwertige Gitterung auch an den Anschlußstellen der Bahnen gegeben ist.

Ein solcher Überstand Ü kann auch als Schmalseiten-Anschluß der Bahnen realisiert werden durch Gitterrückschnitt vor Ort.

## Patentansprüche

1. Unterspannbahn zur Verwendung als Trennlage zwischen einer Metalleindeckung (16) und einer darunterliegenden Schalung (17), mit einer wasserdichten, aber dampfdurchlässigen Diffusionsfolie (1), mit auf einer der Folienbreitseiten (11,12) angeordneter Kunststoffarmierung (2) in Form eines heiß aufgesiegelten Gitters (G), welches Gitter (G) zur Entwässerung des zwischen Folienbreitseite (12) und Metalleindeckung (16) gebildeten Belüftungs-Abstandsraumes (A) brückenartig strukturiert ist, mit einer kleingehaltenen Kontaktfläche zur gittertragenden Folienbreitseite (12).

2. Unterspannbahn nach Anspruch 1, dadurch gekennzeichnet, daß zumindest die Gitterknotenpunkte (4) in das Grundmaterial der Diffusionsfolie (1) eingebettet sind.

3. Unterspannbahn nach einem der vorhergehenden Ansprüche, dadurch gekennzeichnet, daß die Gitterstege (3) unterschiedlich dick sind.

4. Unterspannbahn nach einem der vorhergehenden Ansprüche, dadurch gekennzeichnet, daß in einer Richtung verlaufende Gitterstege (3) hochkant stehen (Figuren 2 und 11).

5. Unterspannbahn nach einem oder mehreren der vorhergehenden Ansprüche, dadurch gekennzeichnet, daß Stege (3') der einen Erstreckungsrichtung (x-x) des Gitters (G) von der Aufsiegelungs-Grundläche (9) abstehend verlaufen und die in der anderen Erstreckungsrichtung (y-y) verlaufenden Stege (3") als Tragleisten (14) in der Aufsiegelungs-Grundfläche (9) stehen.

6. Unterspannbahn nach einem der vorhergehenden Ansprüche, gekennzeichnet durch zur Aufsiegelungs-Grundläche (9) hin offene Querdurchbrüche (15) der Tragleisten (14).

7. Unterspannbahn nach einem der vorhergehenden Ansprüche, gekennzeichnet durch einen seitlichen Überstand (Ü) der Folienbahn über die vom Gitter (G) eingenommene Fläche.

8. Unterspannbahn nach Anspruch 7, dadurch gekennzeichnet, daß ein Überstands-Streifen (39) und ein diesem gegenüberliegenden Rand-Streifen (40) der nächsten seitlich anschließenden Folienbahn mit einer Haftklebeschicht (41) ausgestattet sind.

9. Unterspannbahn nach Anspruch 8, gekennzeichnet durch einen Transferstreifen als Haftklebeschicht (41).

10. Unterspannbahn nach einem der Ansprüche 7 bis 9, dadurch gekennzeichnet, daß die Überstands-Streifen (39) paralle zu den in einer Erstreckungsrichtung verlaufenden Stegen (3) ausgerichtet sind.

11. Unterspannbahn nach einem der Ansprüche 7 bis 10, dadurch gekennzeichnet, daß der Parallelverlauf des Überstands-Streifens (39) zu den hochkant stehenden Stege (3") des Gitters (G) gegeben ist.

12. Unterspannbahn nach einem der vorhergehenden Ansprüche, dadurch gekennzeichnet, daß das Aufsiegeln in einem Flammkaschieren besteht (Fig. 12) derart, daß dachförmig zueinander stehende Basisflächen (34) des Gitters (G) mit ihrer Firstlinie (36) auf die Folienbahn gerichtet zu einer wulstähnlichen Fußzone (35) des Steges (3') verformt sind.

## Claims

1. Minimum stress web for use as a partition layer between a metal covering (16) and shuttering (17) located underneath having a waterproof but vapour-permeable diffusion film (1) with plastic reinforcement (2) arranged on one of the faces (11, 12) of the film in the form of a lattice (G) hot-sealed on top, which lattice (G) is structured in bridging manner for the drainage of water from the ventilation space (A) formed between the face (12) of the film and the metal covering (16) with a contact area which is kept small relative to the face (12) of the film supporting the lattice.

2. Minimum stress web according to Claim 1, characterised in that at least the lattice nodal points (4) are embedded in the base material of the diffusion film (1).

3. Minimum stress web according to one of the preceding claims, characterised in that the lattice stays (3) are of different thicknesses.

4. Minimum stress web according to one of the preceding claims, characterised in that lattice stays (3) running in one direction stand on edge (Figures 2 and 11).

5. Minimum stress web according to one or more of the preceding claims, characterised in that stays (3') in one direction of extension (x-x) of the lattice (G) run at a distance from the seal-on base surface (9) and the stays (3") running in the other direction of extension (y-y) stand as support strips (14) in the seal-on base surface (9).

6. Minimum stress web according to one of the preceding claims, characterised by transverse apertures (15) in the support strips (14) open towards the seal-on base surface (9).

7. Minimum stress web according to one of the preceding claims, characterised by a lateral projection (Ü) of the film web over the area taken up by the lattice (G).

8. Minimum stress web according to Claim 7, characterised in that a projection strip (39) and an edge strip (40) opposite the latter in the next laterally adjoining film web are equipped with a pressure-sensitive adhesive layer (41).

9. Minimum stress web according to Claim 8, characterised by a transfer strip as pressure-sensitive adhesive layer (41).

10. Minimum stress web according to one of Claims 7 to 9, characterised in that the projection strips (39) are aligned parallel to the stays (3) running in one direction of extension.

11. Minimum stress web according to one of Claims 7 to 10, characterised in that the parallel course of the projection strip (39) is with respect to the stays (3") of the lattice (G) which are standing on edge.

12. Minimum stress web according to one of the preceding claims, characterised in that the sealing consists in flame lamination (Figure 12) in such a way that base surfaces (34) of the lattice (G) standing like roofs with respect to one another with their roof ridge line (36) aligned to the film web are deformed to a bead-like foot zone (35) of the stay (3').

## Revendications

1. Bande de sous-couche, destinée à être utilisée comme couche de séparation entre une couverture métallique de toit (16) et un coffrage (17) sous jacent, avec une feuille de diffusion (1) étanche à l'eau mais perméable à la vapeur, avec une armature en matière plastique (2) disposée sur l'un des côtés larges (11, 12) de la feuille, armature réalisée sous la forme d'une grille (G) appliquée et scellée à chaud, la grille (G) étant structurée pour former un pontage afin d'assurer le drainage du volume d'espacement d'aération (A) constitué entre le côté large (12) de la feuille et la couverture métallique de toit (16), la surface de contact vis-à-vis du côté large (12) de la feuille portant la grille étant maintenue à une faible valeur.

2. Bande de sous-couche selon la revendication 1, caractérisée en ce qu'au moins les points de noeud de la grille (4) sont noyés dans le matériau de base de la feuille de diffusion (1).

3. Bande de sous-couche selon l'une des revendications précédentes, caractérisée en ce que les nervures de grille (3) sont d'épaisseurs différentes.

4. Bande de sous-couche selon l'une des revendications précédentes, caractérisée en ce que les nervures de grille (3) s'étendant dans une direction sont placées sur chant (figures 2 et 11).

5. Bande de sous-couche selon l'une ou plusieurs des revendications précédentes, caractérisée en ce que des nervures (3') selon l'une (x-x) des directions d'extension de la grille (G) s'étendent à distance de la surface de base (9) de scellement et les nervures (3"), s'étendant dans l'autre (y-y) direction d'extension, sont situées, à titre de bandes support (14), sur la face de base (9) de scellement.

6. Bande de sous-couche selon l'une des revendications précédentes, caractérisée par des passages transversaux (15), appartenant aux bandes support (14) et ouverts en direction de la face de base (9) de scellement.

7. Bande de sous-couche selon l'une des revendications précédentes, caractérisée par un dépassement latéral (Ü) de la bande de feuille, sur la sur-surface occupée par la grille (G).

8. Bande de sous-couche selon la revendication 7, caractérisée en ce qu'une bande en saillie (39) et une bande de bordure (40), placée en regard de celle-ci et appartenant à la bande de feuille subséquente se raccordant latéralement, sont équipées d'une couche d'adhésif (41).

9. Bande de sous-couche selon la revendication 8, caractérisée par une bande de transfert servant de couche d'adhésif (41).

10. Bande de sous-couche selon l'une des revendications 7 à 9, caractérisée en ce que les bandes en saillie (39) sont orientées parallèlement aux nervures (3) selon une direction d'extension.

11. Bande de sous-couche selon l'une des revendications 7 à 10, caractérisée en ce que l'allure parallèle de la bande en saillie (39) est donnée par rapport aux nervures (3"), placées sur chant, de la grille (G).

12. Bande de sous-couche selon l'une des revendications précédentes, caractérisée en ce que le scellement par stratification à la flamme est réalisé (figure 12) de telle manière que des surfaces de base (34) de la grille (G), placées les unes par rapport aux autres en formant un toit, et orientées avec leur ligne de faîte (36) sur la bande de feuille, soient formées pour constituer une zone de pied (35), analogue à un bourrelet, de la nervure (3').
